# EUROPEAN PATENT SPECIFICATION

(11) **EP 1 326 175 B1**
(45) Date of publication and mention of the grant of the patent: **17.06.2009**
(21) Application number: 02000106.1
(22) Date of filing: 02.01.2002
(51) Int. Cl.: G06F 17/24

(54) **Method and computer system for editing text elements having hierachical relationships**
System und Verfahren zum Editieren von Textelementen mit hierarchichen Bezügen
Système et procédé pour éditer des elements de texte avec des relations hiérarchiques

(43) Date of publication of application: 09.07.2003
(73) Proprietor: SAP AG, 69190 Walldorf (DE)
(72) Inventor: Bender, Joachim, 69469 Weinheim (DE)
(74) Representative: Schiuma, Daniele Wolfgang

(56) References cited:
- US-A- 5 845 300
- US-B1- 6 314 559

## Description

### Field of the Invention

The present invention generally relates to electronic data processing, and more particularly, relates to method, computer program product and system to improve text editing for a user.

### Background of the Invention

Text editors known in the art have a plurality of functions that support a user in his/her efforts to generate text that is syntactically correct. Functions, such as spell checking or auto-completion typically provide a choice of correction options to the user, when an error or incomplete statement is detected by the editor within a document. Usually, the editor prompts the user with a flat list (for example, within a popup window, a drop down list, a list of radio buttons, etc.) of options and the user selects the appropriate option from the list. The editor inserts the selected option into the document. In the case of editors for generating documents that use a restricted set of text elements (e.g. editors for program code documents or medical diagnostics) often a complex rule set defines dependencies between various text elements. The user has to know the rule set in order to generate syntactically correct statements within the document. Typically, the rule set can be described as hierarchal relationships between various text elements exists. There's an ongoing need to improve text editors to support the user in gaining better control of a computer system when generating documents that include text elements having complex interdependencies.

US-B1-6314559 discloses a visual development system having an interface which assists a user with input of source code expressions and statements during creation of a computer program is described. The interface includes an Integrated Development Environment (IDE) interface having a code editor with "Code Completion" and "Code Parameter" features for displaying context sensitive pop-up windows within a source code file. Code Completion is implemented at the user interface level by displaying a Code Completion dialog box after the user enters a record or class name followed by a period. For a class, the dialog lists the properties, methods and events appropriate to the class. For a record or structure, the dialog lists the data members of the record. To complete entry of the expression, the user need only select an item from the dialog list, whereupon the system automatically enters the selected item in the code. Code completion also operates during input of assignment statements. When the user enters an assignment statement for a variable and presses a hot key (e.g., <ctrl><space_bar>), a list of arguments valid for the variable is displayed. Here, the user can simply select an argument to be entered in the code. Similarly, the user can bring up a list of arguments when typing a procedure, function, or method call and needs to add an argument. In this manner, the user can view the required arguments for a method as he or she enters a method, function, or procedure call.

It is an object of the invention to provide a user friendly interface for text editing which supports the user in editing texts.

This object is solved according to the invention by the features of the independent claims. Preferred embodiments of the invention are object of the dependent claims.

It is an advantage of the present invention that the user can generate a correct statement in the document without knowing:
- the library elements (namespaces, text elements, attributes);
- the correct spelling of the library elements; and
- the interdependencies between library elements.

The aspects of the invention will be implemented by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of the inventive computer system;
- FIG. 2: illustrates details of the inventive computer system at four consecutive time points;
- FIG. 3: illustrates the insertion of a required attribute into a document;
- FIG. 4: illustrates the insertion of an optional attribute into the document;
- FIG. 5: illustrates the insertion of a further optional attribute into the document;
- FIG. 6: illustrates two alternative implementations of a screen view according to the present invention;
- FIG. 7: is a simplified flowchart of the inventive method; and
- FIG. 8: is a simplified block diagram of the inventive computer program.

### Detailed Description of the Invention

Wherever possible, the same reference numbers will be used throughout the drawings to refer to the same or like parts. For convenience of explanation a list of references is provided prior to the claims.

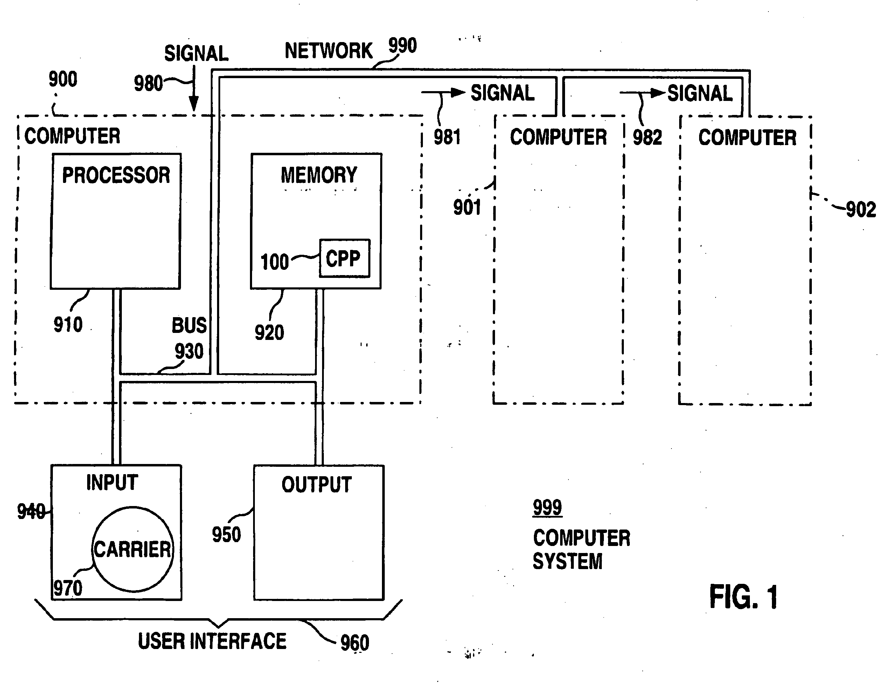

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

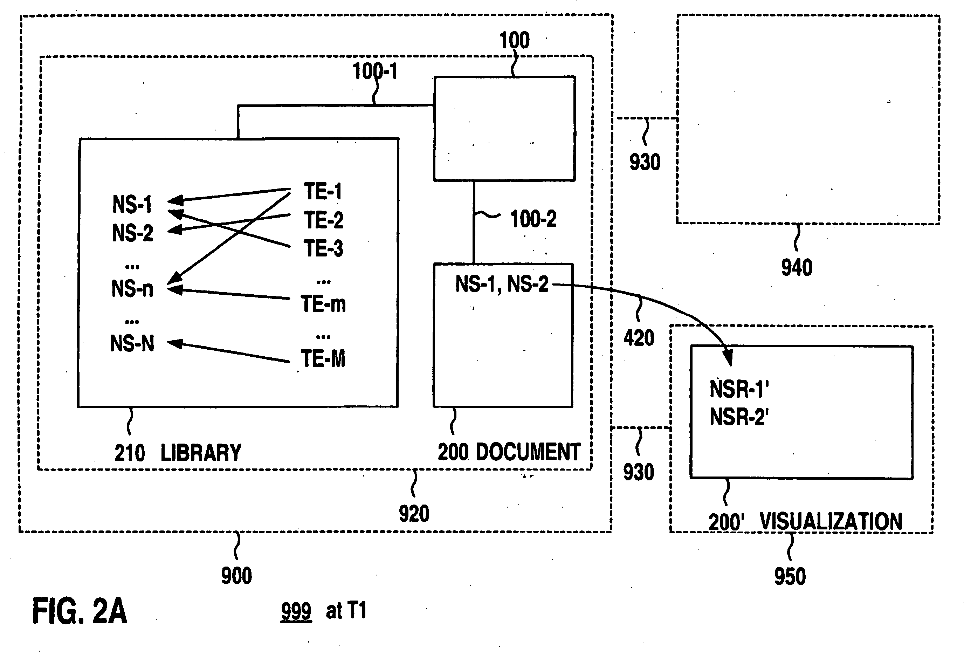

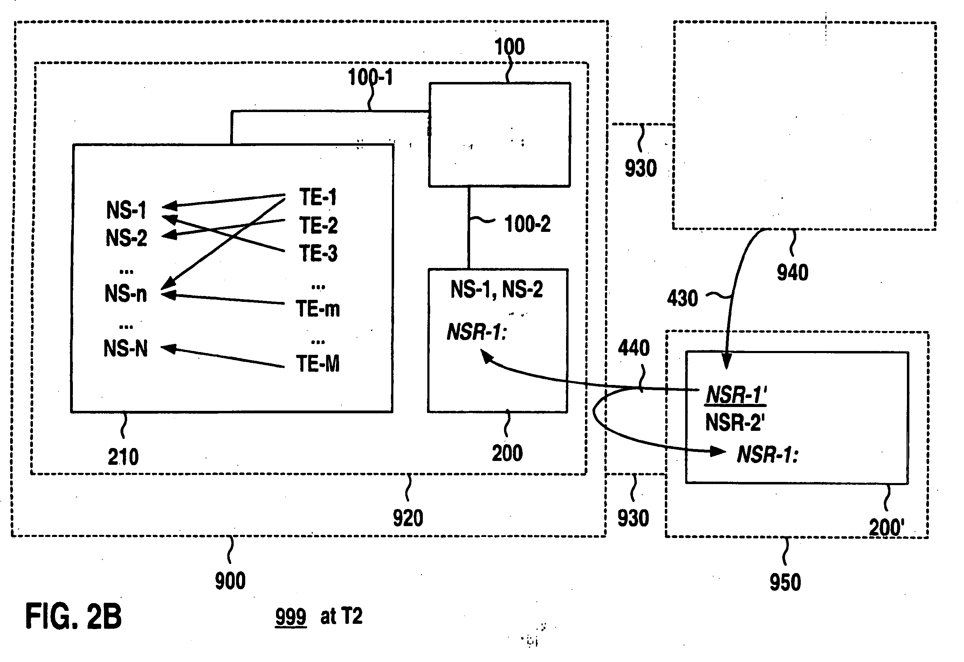

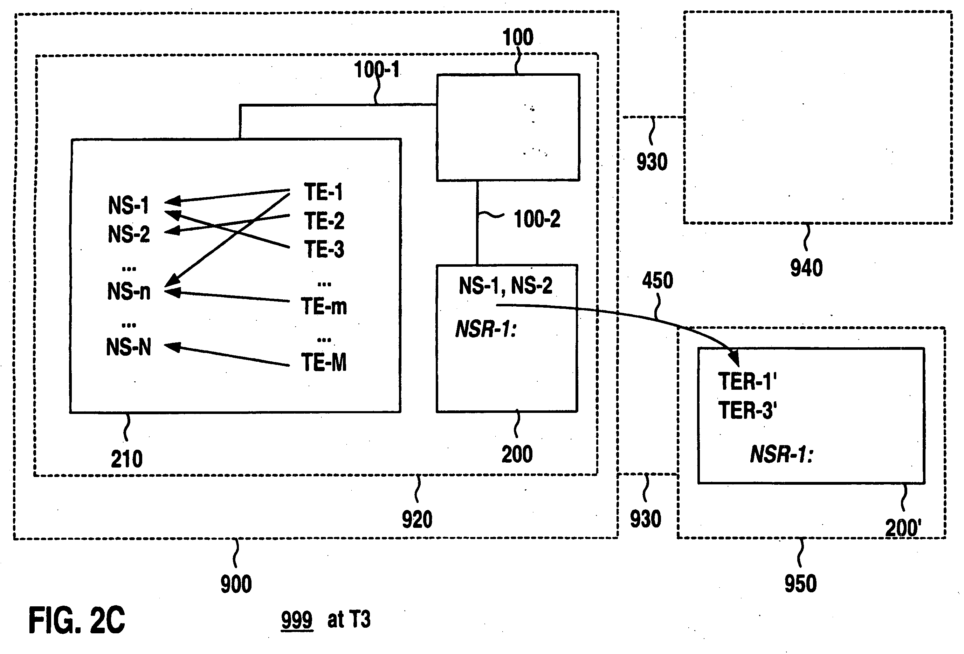

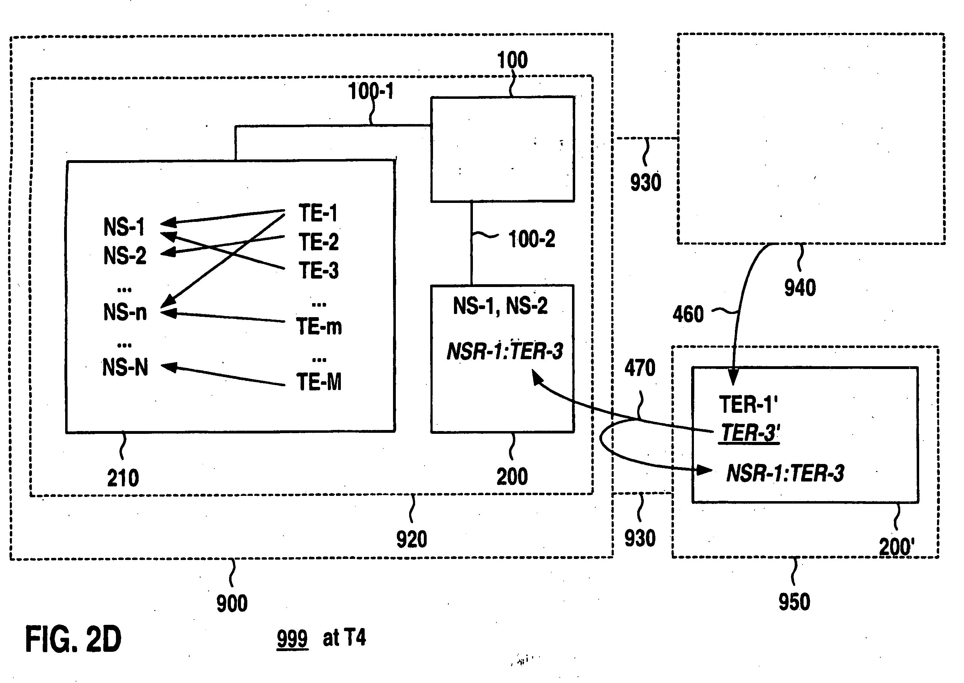

FIG. 2 illustrates the inventive computer system 999 at four consecutive time points T1-T4. Dashed lines/frames illustrate hardware components and solid lines/frames illustrate software components. Bended arrows indicate method steps.

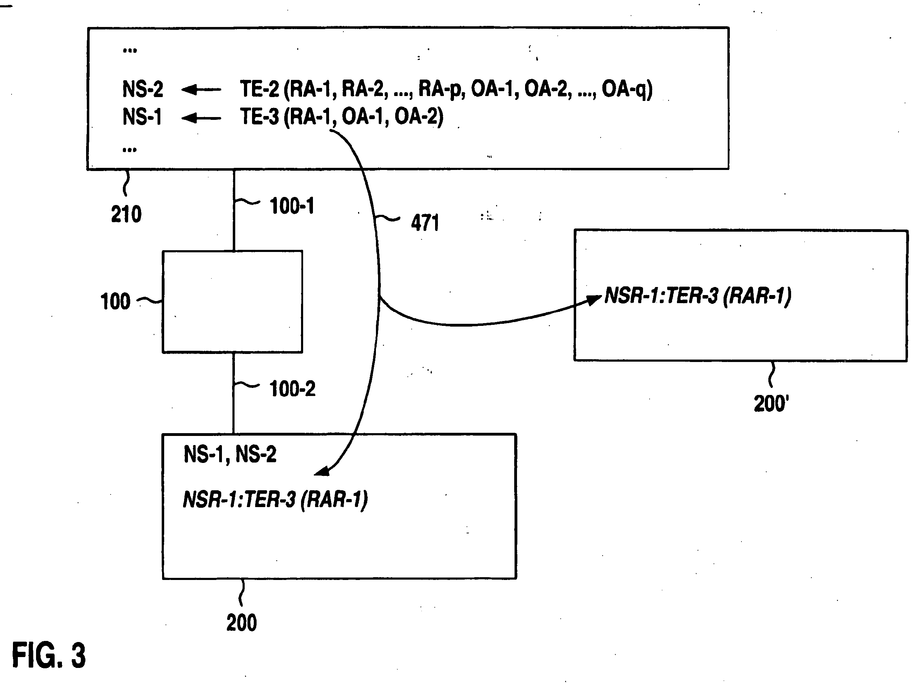

Computer 900 includes memory 920 and is connected with input device 940 and output device 950 via bus 930. Memory 920 stores CPP 100, document 200 and, preferably, library 210. Library 210 can also be stored on a further computer (e.g. 901, cf. FIG. 1) in computer system 999. CPP 100 has library interface 100-1 to library 210 to retrieve elements from the library 210 and further has editor interface 100-2 to document 200 for editing. Document 200 is visualized for the user on output device 950 via visualization 200'. Library 210 stores predefined relationships between predefined elements that can be inserted into document 200. For example, elements stored in library 210 are namespaces (NS), text elements (TE), requested attributes (RA, cf. FIG. 3; tables 1, 2) and optional attributes (OA, cf. FIG. 3; tables 1, 2). As used hereinafter, different namespaces, text elements, requested attributes and optional attributes are distinguished by an index notation:
namespaces: NS-1, ..., NS-n, ..., NS-N;
text elements: TE-1, ... TE-m, ... TE-M;
requested attributes: RA-1, ... RA-p, ..., RA-P; and
optional attributes: OA-1, ..., OA-q, ..., OA-Q.

Representations of these elements use the following notation:
namespace representations: NSR-i', NSR-i;
text element representations: TER-i', TER-i;
requested attribute representations: RAR-i; and
optional attribute representations: OAR-i', OAR-i, wherein i stands for the corresponding index. Representations ending with -i' and representations ending with -i are representations of the same element but can be different. The advantage of having two representations of the same element is the possibility of having a short and a long representation version. The short version can be useful for presenting an element overview to the user and support an easy selection by the user. The long version can be useful to store elements in a form that is required by computer system 999.

Library 210 defines interdependencies between these elements. For example, the interdependencies can be implemented via a database table as illustrated in table 1. Table 1 shows the interdependencies in the form of hierarchical dependencies between various elements of library 210.

**Table 1: library 210 implemented as table**

| **hierarchy level** | **node** | **parent** | **child** |
|---|---|---|---|
| 1 | NS-1 | ROOT | TE-1 |
| 1 | NS-1 | ROOT | TE-3 |
| 1 | NS-2 | ROOT | TE-2 |
| 1 | ··· | ROOT | ... |
| 2 | TE-3 | NS-1 | RA-1 |
| 2 | TE-3 | NS-1 | OA-1 |
| 2 | TE-3 | NS-1 | OA-2 |
| 2 | TE-1 | NS-1 | TE-m |
| 2 | TE-2 | NS-2 | RA-1 |
| 2 | ··· | ··· | ··· |
| 3 | TE-m | TE-1 | OA-3 |
| ··· | ··· | ··· | ··· |

Namespaces NS-1 to NS-N are assigned to a ROOT node (level 0 of the hierarchy) and form level 1 in the hierarchy of library elements. Each namespace can have multiple text elements TE-1 to TE-M that are assigned as child elements to the namespace. The text elements form level 2 in the hierarchy. Each text element can have multiple attributes (requested attributes RA-1 to RA-P; optional attributes OA-1 to OA-Q) that are assigned as child elements to the text element. In this case, attributes form level 3 of the hierarchy. A text element (e.g. TE-1) also can have further text elements (e.g. TE-m) assigned to it. In this case, the further text elements are like attributes and can form deeper levels (>= 3) in the hierarchy.

Table 2 shows an alternative implementation of library 210 via XML-files. In this case, for each namespace NS-1 to NS-N an XML-file is stored that includes the hierarchical dependencies of all elements that are defined for the namespace (e.g. NS-1). Each node in the hierarchy is represented by a start-tag, such as <NS-1>, and an end-tag, such as </NS-1>. An abbreviated notation for start-/end-tag is <... />. Nodes (e.g. <TE-1>, <TE-3>) that are between the start-/end-tag of a node (e.g. <NS-1>) are assigned to this node.

**Table 2: library 210 implemented by using XML**

| **line** | **XML** |
|---|---|
| 1 | <NS-1> |
| 2 | <TE-1> |
| 3 | <TE-m> |
| 4 | <OA-3 /> |
| 5 | </TE-m> |
| 6 | </TE-1> |
| 7 | <TE-3> |
| 8 | <RA-1 /> |
| 9 | <OA-1 /> |
| 10 | <OA-2 /> |
| 11 | </TE-3> |
| 12 | ... |
| 13 | </NS-1> |

At T1 (cf. FIG. 2A), document 200 references namespaces NS-1, NS-2. When the user indicates (e.g. via a control key/button of input device 940) to computer 900 that he/she wants to insert text into document 200, CPP 100 determines NS-1 and NS-2 as valid namespaces for document 200.

Advantageously, a default namespace can be defined, that is valid even if no namespace is included in document 200.

Computer 900 then prompts 420 the user with namespace representations NSR-1', NSR-2' that correspond to valid namespaces NS-1, NS-2.

For example, NSR-1', NSR-2' (or representations of other elements of library 210) can be displayed in a specific section of visualization 200' or within a pop-up window.

At T2 (cf. FIG. 2B), the user has selected NSR-1' via input-device 940 (e.g. by clicking on the respective item using a mouse device). As used hereinafter, selected items are illustrated by an italic, underlined font. The selection NSR-1' was received 430 by computer 900 and CPP 100 inserts 440 NSR-1 into document 200. As used hereinafter, inserted elements are illustrated by an italic font. Substantially simultaneously, inserted elements (e.g. NSR-1) become visible for the user on visualization 200'.

Advantageously, an inserted element (e.g. NSR-1) is followed by a separator, such as a colon (:) or a slash (/) or another suitable, user-definable character. CPP 100 automatically adds the separator to the inserted element at an appropriate position.

At T3 (cf. FIG. 2C), the user indicates to computer 900 that he/she wants to insert further text into document 200. For example, by positioning a cursor next to the separator of inserted NSR-1, the user indicates to the system that a text element assigned to corresponding NS-1 is requested. CPP 100 determines from library 210 all text elements (TE-1, TE-3) that are assigned to NS-1 and prompts 450 the user with the corresponding representations TER-1', TER-3'.

At T4, (cf. FIG. 2D), the user has selected TER-3', which was received 460 by computer 900. CPP 100 inserts 470 TER-3 into document 200 at an appropriate position (e.g. behind the separator to the corresponding namespace representation NSR-1:).

It is an advantage of the present invention that the user does not need to know all elements of library 210 and their respective interdependencies. Rather, the inventive computer system indicates to the user all possible entries at a specific position in document 200 in a syntactically correct manner. This facilitates the document creation for the user and shortens the time that is needed by the user for document creation.

In FIGS. 3-5, for convenience of explanation, only software components and method steps are shown.

FIG. 3 illustrates the insertion of a required attribute into document 200.

A more detailed view of library 210 illustrates that TE-2 (assigned to NS2) and TE-3 (assigned to NS-1) have attributes. Required attributes RA-1 to RA-p and optional attributes OA-1 to OA-q are assigned to TE-2. Required attribute RA-1 and optional attributes OA-1, OA-2 are assigned to TE-3.

In case a selected text element (e.g. TE-3) has required attributes (e.g. RA-1), CPP 100 inserts 471 corresponding representations (e.g. RAR-1) into document 200 at an appropriate position (where it is syntactically correct). This occurs substantially simultaneously with the insertion 470 (cf. FIG. 2) of the selected text element representation (e.g. TER-3).

Advantageously, the required attribute is inserted behind the text element where it is assigned to. CPP 100 can insert a further separator (e.g. parenthesis, blank, etc.) between the text element and the attribute. The further separator can be different from the separator behind a namespace.

It is advantage of the present invention that the computer 900 automatically handles required attributes of a text element when the user is editing document 200. The user even does not need to now about the required attributes.

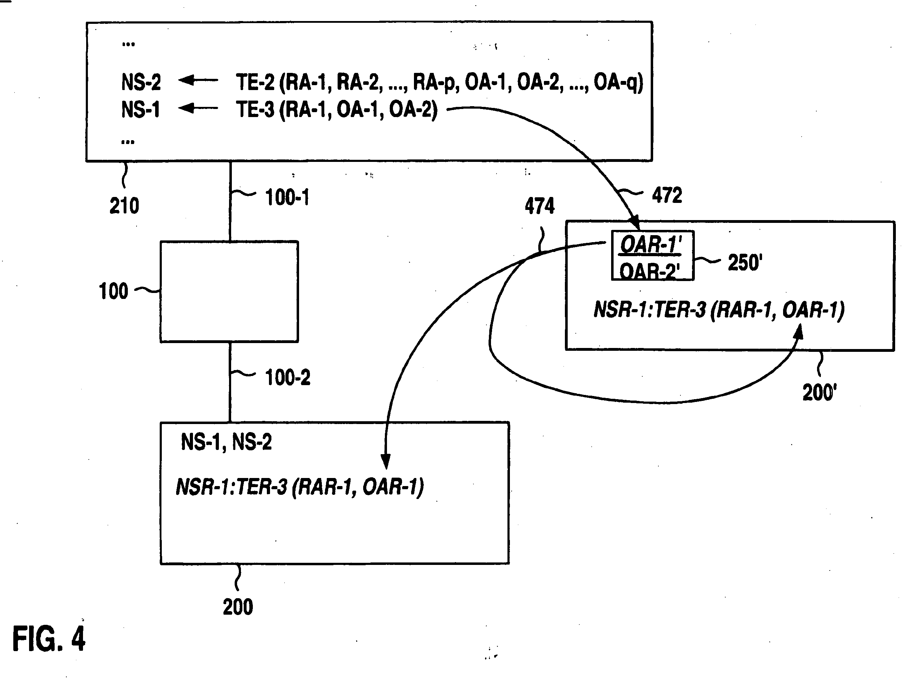

FIG. 4 illustrates the optional insertion of optional attribute representations into document 200.

In case a selected text element (e.g. TE-3) has optional attributes assigned, the user, preferably, positions the cursor next to the corresponding text element representation (e.g. TER-3). The user indicates (e.g. via a control key/button of input device 940) to computer 900 that he/she wants to insert an optional attribute representation into document 200 for the selected text element. For example, CPP 100 determines optional attributes OA-1, OA-2 that are assigned to text element TE-3 in library 210 and prompts 472 the user with list 250' of corresponding selectable optional attribute representations OAR-1', OAR-2'. The user selects OAR-1' from list 250'. Computer 900 receives OAR-1' from the user and inserts OAR-1 into the document.

Advantageously, CPP 100 inserts a still further separator, such as a comma or a blank, between attributes. This separator can be different from the previously used separators and, preferably, is user definable.

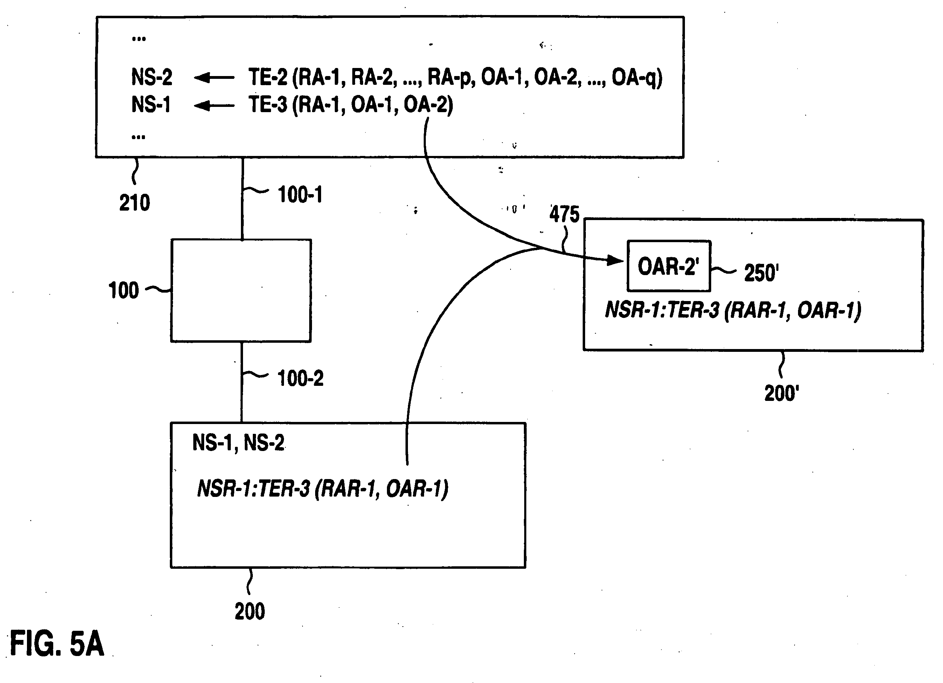

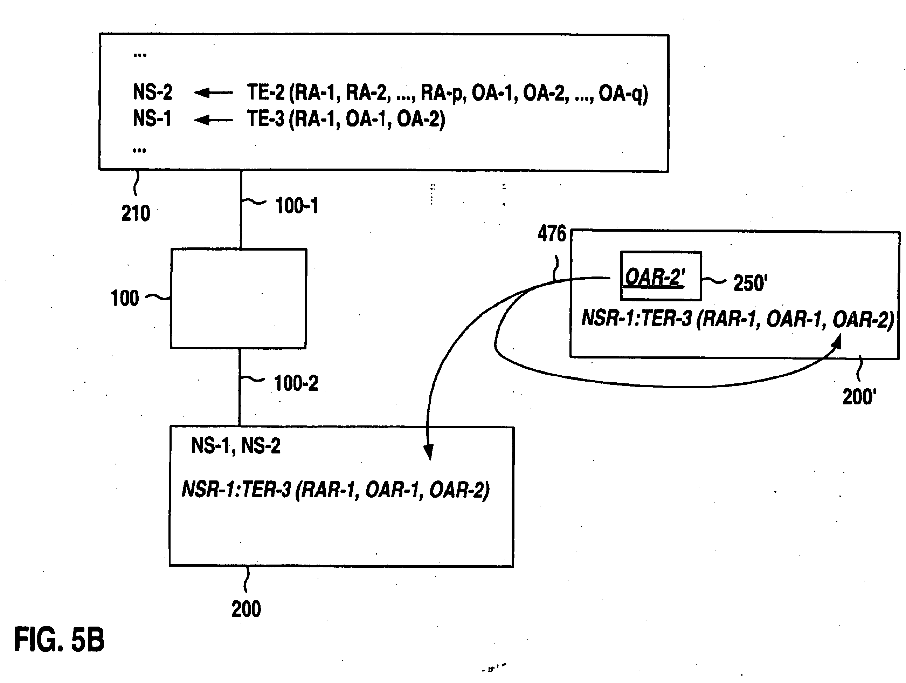

FIG. 5 illustrates the insertion of a further optional attribute into document 200.

In the example, further optional attribute OA-2 is assigned to selected text element TE-3. A corresponding representation OAR-2 is not yet inserted into document 200. The user indicates to computer 900 that he/she wants to insert a representation (e.g. OAR-2) of a further optional attribute (e.g. OA-2) of TE-3 into document 200.

CPP 100 determines that OAR-1 is already inserted and, therefore, deletes 475 (cf. FIG. 5A) OAR-1' from list 250'.

A person skilled in the art can provide this feature also when the user selects a text element representation of a text element (e.g. TE-m) that is assigned to a further text element (e.g. TE-1; cf. table 1 - hierarchy level 3; table 2 - line 3). In this case TE-m functions like an attribute of TE-1.

FIG. 5B shows the result of repeating 476 the procedure described under FIG. 4, wherein OAR-2 is inserted instead of OAR-1.

The present invention is now further explained with a specific scenario, wherein a software development user (SDU) develops a Java Server Page (JSP) with an editor according to the present invention. In this scenario, library 210 corresponds to a plurality of so called tag libraries. In the implementation according to table 2 a tag library (taglib) corresponds to an XML file for a namespace. Document 200 corresponds to a Java Server Page (called page in the following description). The page includes statements to call Java functions. At runtime the Java functions generate HTML code that is processed and displayed by a conventional browser.

For example, a tag library for business HTML can be defined within the page 200 by the statement:
<%@ taglib uri="/c:/xml/jsp/htmlbll.tld" prefix= "htmlb" %>.

The location (/c:/xml/jsp/htmlbll.tld) of the tag library is given via the URI (unique resource identifier) attribute and the name of the corresponding namespace (htmlb) is defined via the prefix attribute.

Advantageously, a tag library for the namespace jsp including JSP standard tags is defined for each page by default.

CPP 100 allows SDU to insert a plurality of elements of a plurality of tag libraries in compliance with the hierarchical interdependencies defined in the tag libraries. It is an advantage of the present invention that the program code generated by the user in page 200 complies with JSP syntax requirements.

Table 3 maps terms used in FIGS. 2-5 to the corresponding terms in the JSP scenario. The JSP terms are explanatory only and can also be defined in a different way when leading to a statement with equivalent JSP syntax.

**Table 3: mapping of FIGS. 2-5 terms to JSP scenario terms**

| **FIGS. 2-5** **term** | **JSP scenario term** |
|---|---|
| NS-1 | taglib htmlb |
| NS-2 | taglib jsp |
| NSR-1' | <htmlb |
| NSR-1 | <htmlb></htmlb> |
| NSR-2' | <jsp |
| TE-1 | tag tree |
| TE-3 | tag tray |
| TER-1' | tree> |
| TER-3' | tray> |
| TER-3 | tray tray |
| RA-1 | tray ID |
| RAR-1 | id=" " |
| OA-1 | tray title |
| OAR-1' | title |
| OAR-1 | title=" " |
| OA-2 | tray tooltip |
| OAR-2' | tooltip |
| OAR-2 | tooltip="" |

Table 4 illustrates, how the SDU generates a syntactically correct statement within page 200. The assumption is made that taglib htmlb is defined within page 200 via the statement:
<%@ taglib uri="/c:/xml/jsp/htmlbll.tld" prefix= "htmlb" %>
and that further, taglib jsp is defined by default for the page.

The step column lists the reference numbers of the corresponding steps that lead to page content in the statement column. The prompted and received columns illustrate the interaction of computer 900 (cf. FIG. 2) with SDU as described under FIG. 2.

**Table 4: statement generation**

| **steps** | **prompted** | **received** | **statement** |
|---|---|---|---|
| 420, 430, 440 | <htmlb <jsp | <htmlb | <htmlb: |
| 450, 460, 470, 471 | tree> tray> | tray> | <htmlb:tray id=""></htmlb:tray> |
| 472, 473, 474 | title tooltip | title | <htmlb:tray id="" title=""> </htmlb:tray> |
| 475, 476 | tooltip | tooltip | <htmlb:tray id="" title="" tooltip=""></htmlb:tray> |

The separator used for separating taglib representations from tag representations is a colon (:). The separator used to separate tag representations from attribute representations and attribute representations from further attribute representations is the blank character.

In case an attribute (e.g. tray ID, tray title) requires a value, the SDU positions a cursor (e.g. by using input device 940) between the inverted commas ("") of the corresponding attribute representation and enters the value, for example, via a keyboard.

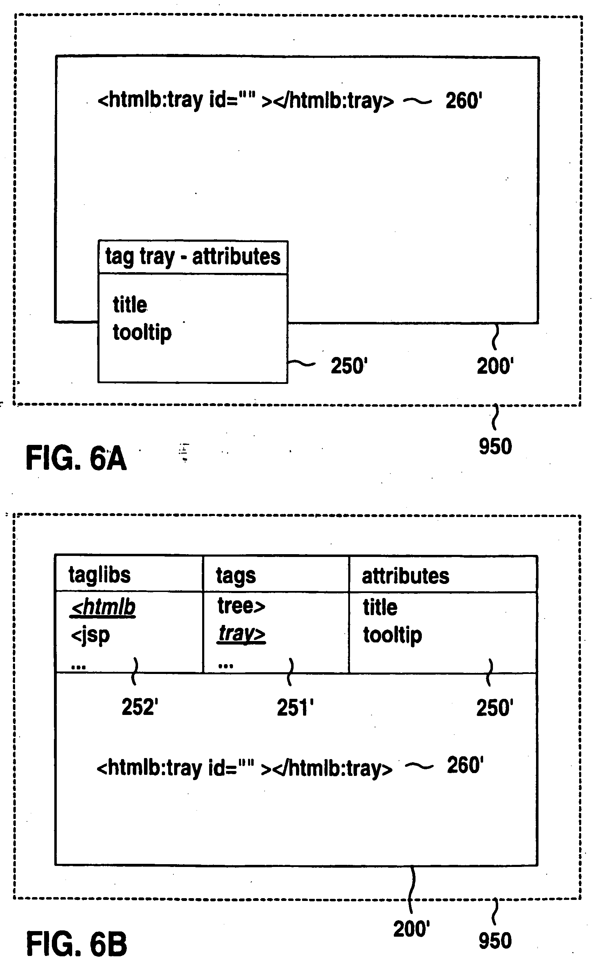

FIG. 6 shows two alternative implementations of a screen view presented to SDU on output device 950, when inserting an optional attribute representation into page 200. The screen view includes visualization 200' and list 250'. In one implementation (cf. FIG. 6A) list 250' is implemented as a pop-up window. In another implementation (cf. FIG. 6B) list 250' is implemented as an integrated component of visualization 200'. After having generated statement 260' as described by table 4 in steps 420-471, SDU indicates to computer 900 the desire to insert optional attribute representations. For example, SDU positions the cursor inside the start-tag (<htmlb:tray id="">) of statement 260' and launches a control key sequence (e.g. Ctrl+B via a keyboard or a middle mouse button sequence via a mouse device).

FIG. 6A shows list 250' implemented as a pop-up window. Advantageously, the pop-up window does not hide any part of statement 260'.

FIG. 6B shows list 250' implemented as integrated component of visualization 200'. Advantageously, similar lists are displayed for taglib representations (e.g. 252') and tag representations (e.g. 251'). The advantage is the visualization of the exact location within the hierarchy of library 210 of any inserted element of statement 260' (illustrated by italic underlined font). Alternatively, a corresponding tree display is possible to gain the same advantage.

Advantageously, items listed in lists 250', 251', 252' are displayed according to a specific order criteria, such as an alphabetic order or user definable order criteria.

Advantageously, CPP 100 (cf. FIG. 2) scans statement 260' for taglib representations, tag representations, attribute representations and the corresponding separators, when SDU launches a corresponding control key sequence. Preferably, CPP 100 behaves according to the description of the JSP scenario, if the cursor is positioned within a valid insertion position (e.g. valid start-tags <...>, <... />) of statement 260'. However, CPP 100 remains idle, if the cursor is positioned within a valid end-tag (e.g. </ ...>).

Advantageously, when CPP 100 scans statement 260' it recognizes, when SDU has manually entered a fragment of statement 260' (cf. table 5: <htmlb:tra). In this case, SDU is only prompted with representations of library 210 elements (e.g. tray>) that are determined to complement the fragment in a syntactically correct manner.

**Table 5: page content generation with manually entered fragment**

| **steps** | **prompted** | **received** | **page content** |
|---|---|---|---|
| 420, 430, 440 | <htmlb <jsp | <htmlb | <htmlb: |
| SDU manual insertion | | | <htmlb:tra |
| 450, 460, 470, 471 | tray> | tray> | <htmlb:tray id="n> </htmlb:tray> |

A person skilled in the art can extend the present invention to editing documents that relate to other fields, such as medical diagnosis, where a specific language is used and the language includes a limited amount of terms that have hierarchical relationships. In such a scenario, a medical assistant user (MAU) generates a medical diagnosis document 200 for a patient. Library 210 corresponds to a plurality of (medical) term libraries. In the implementation according to table 2 a term library corresponds to an XML file for a specific medical field (namespace), such as orthopaedics (NS-1) or dentistry (NS-2).

For example, a plurality of text elements, such as vertebra (TE-1), cranium (TE-2), etc. is assigned to the namespace orthopaedics. Text element vertebra (TE-1) can have further text elements, such as cervical vertebra (e.g. TE-m, cf. table 1) and lumbar vertebra, assigned to it. Text element cervical vertebra can have attributes, such as required attribute C (e.g. RA-1).

If a physician diagnoses for example a defect at the 5^{th} cervical vertebra, the MAU can quickly generate the following correct diagnosis statement:
vertebra / cervical vertebra (C5).

In this example,
- TER-1 correspond to vertebra separated by a slash (/) from
- TER-m that corresponds to cervical vertebra separated by a blank from
- RAR-1 that corresponds to (C)

NSR-1 is suppressed in the example as it gives no valuable information in the diagnosis document 200. However, if the physician is specialized in multiple medical fields, prompting MAU with NSR-1' (e.g. orthopaedics) supports the user to select the related text elements faster than without this selection criteria. In this example, element representations TER-1, TER-m and RAR-1 can equal TER-1', TER-m' and RAR-1', respectively.

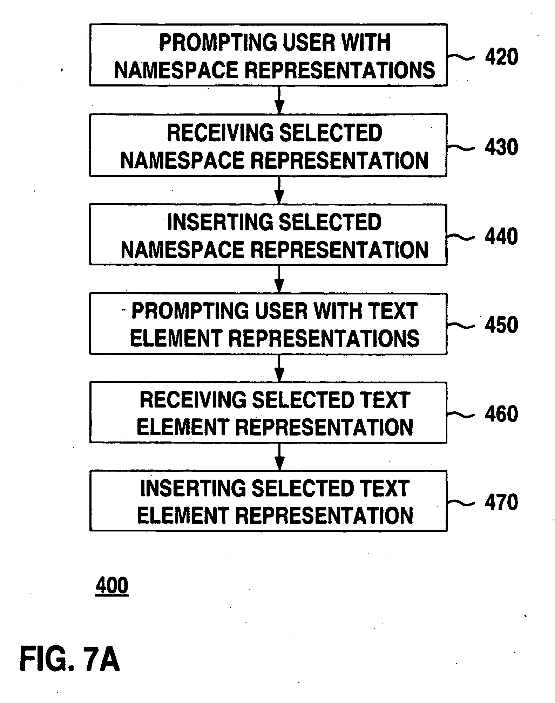

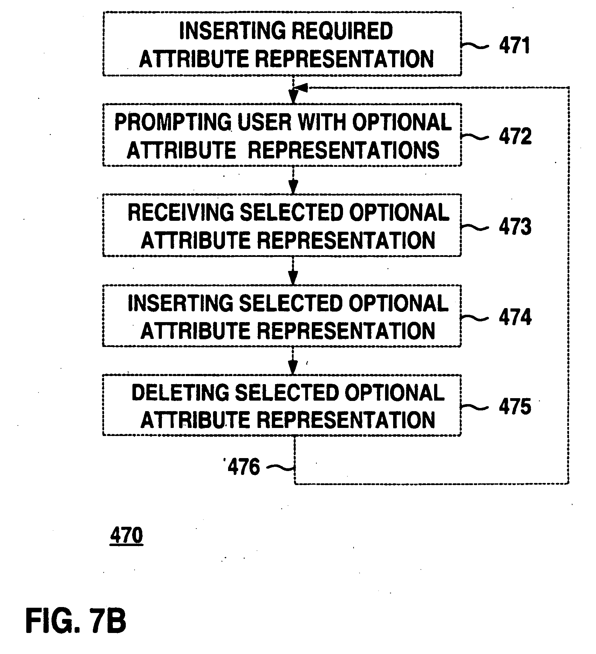

The present invention is now described as computer-implemented method 400 (cf. FIG. 7) that is performed by CPP 100 when executed by processor 910 (cf. FIG. 1) of computer 900 (cf. FIG. 1). CPP 100 can be stored on data carrier 970 (cf. FIG. 1) or carried by signal 980 (cf. FIG. 1).

FIG. 7 is a simplified flowchart of method 400. Optional method steps are illustrated by dashed frames/lines. Method 400 comprises the following steps (cf. FIG. 7A) :
prompting user with namespace representations 420, receiving selected namespace representation 430, inserting selected namespace representation 440, prompting user with text element representations 450, receiving selected text element representation 460 and inserting selected text element representation 470.

Optionally, inserting step 470 comprises the following optional sub-steps (cf. FIG. 7B):
inserting required attribute representation 471, prompting user with optional attribute representations 472, receiving selected optional attribute representation 473, inserting selected optional attribute representation 474, deleting selected optional attribute representation 475 and repeating 476 steps 472, 473 and 474.

The steps are now further explained. Implementation details for each step are disclosed in FIGS. 2-6.

In the prompting user with namespace representations steps 420, computer 900 prompts a user via output device 950 with at least one namespace representation (e.g. NSR-1', NSR-2'). Each namespace representation corresponds to a namespace (e.g. NS-1, NS-2, respectively) that is valid for document 200.

In the receiving selected namespace representation step 430, computer 900 receives from the user via input device 940 selected namespace representation NSR-1' that corresponds to selected namespace NS-1.

In the inserting selected namespace representation step 440, computer 900 inserts further selected namespace representation NSR-1 into document 200. NSR-1 can be different from NSR-1' but corresponds to the same namespace NS-1.

In the prompting user with text element representations step 450, computer 900 prompts the user with text element representations (e.g. TER-1', TER-3'). Each text element representation corresponds to a text element (e.g. TE-1, TE-3, respectively) that is assigned to selected namespace NS-1 in library 210.

In the receiving selected text element representation step 460, computer 900 receives from the user selected text element representation TER-3', which corresponds to selected text element TE-3.

In the inserting selected text element representation step 470, computer 900 inserts further selected text element representation TER-3 into document 200. TER-3 can be different from TER-3' but corresponds to the same text element TE-3.

FIG. 7B illustrates optional sub-steps 471-476 of inserting selected text element representation step 470.

In the inserting required attribute representation step 471, computer 900 inserts predefined required attribute representation RAR-1 of predefined required attribute RA-1 into document 200. RA-1 is assigned to selected text element TE-3 in library 210.

In the prompting user with optional attribute representations step 472, computer 900 prompts the user with list 250' of predefined selectable optional attribute representations OAR-1', OAR-2' of predefined optional attributes OA-1, OA-2. OA-1, OA-2 are assigned to selected text element TE-3 in library 210.

In the receiving selected optional attribute representation step 473, computer 900 receives from the user selected optional attribute representation OAR-1' that corresponds to selected optional attribute OA-1.

In the inserting selected optional attribute representation step 474, computer 900 inserts further selected optional attribute representation OAR-1 into document 200. OAR-1 corresponds to selected optional attribute OA-1.

In the deleting selected optional attribute representation step 475, computer 900 deletes selected optional attribute representation OAR-1' from list 250'.

In the repeating step 476, computer 900 repeats steps 472, 473 and 474 to insert still further optional attribute representation OAR-2 into document 200. OAR-2 corresponds to further optional attribute OA-2 that is assigned to selected text element TE-3 in library 210.

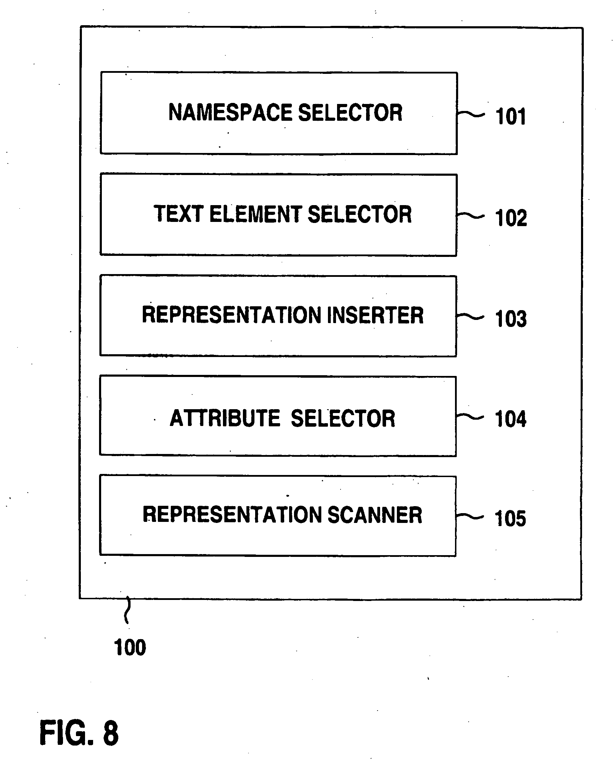

FIG. 8 is a simplified block diagram of the inventive computer program 100. Program 100 includes components namespace selector 101, text element selector 102, representation inserter 103, attribute selector 104 and representation scanner 105 that correspond to specific coding sections in computer program 100. The function of each component is now explained.

Namespace selector 101 prompts 420 the user with at least one namespace representation NSR-1', NSR-2' corresponding to a namespace NS-1, NS-2 that is valid for document 200. Namespace selector 101 further receives 430 from the user selected namespace representation NSR-1', which corresponds to selected namespace NS-1.

Text element selector 102 prompts 450 the user with text element representations TER-1', TER-3' of text elements TE-1, TE-3. TE-1, TE-3 are assigned to selected namespace NS-1 in library 210. Text element selector 102 further receives 460 from the user selected text element representation TER-3' corresponding to selected text element TE-3.

Optional attribute selector 104 prompts 472 the user with list 250' of predefined selectable optional attribute representations OAR-1', OAR-2' of predefined optional attributes OA-1, OA-2. OA-1, OA-2 are assigned to selected text element TE-3 in library 210. Attribute selector 104 further receives 473 from the user selected optional attribute representation OAR-1' that corresponds to selected optional attribute OA-1. Attribute selector 104 also deletes 475 selected optional attribute representation OAR-1' from list 250' if a representation of OA-1 is already inserted at an appropriate position within document 200.

Representation inserter 103 inserts 440 further selected namespace representation NSR-1 into document 200. NSR-1 corresponds to selected namespace NS-1. Representation inserter 103 further inserts 470 further selected text element representation TER-3 into document 200. TER-3 corresponds to selected text element TE-3. Optionally, representation inserter 103 further inserts 471 predefined required attribute representation RAR-1 of predefined required attribute RA-1 into document 200. RA-1 is assigned to selected text element TE-3 in library 210. Optionally, representation inserter 103 further inserts 474 still further selected optional attribute representation OAR-1 that corresponds to selected optional attribute OA-1.

Representation scanner 105 scans statement 260' in document 200 for a valid insertion position for further elements of statement 260'. Representation scanner 105 further recognizes a fragment within statement 260' and determines representations of library 210 elements that complement the fragment in a syntactically correct manner.

| **Reference** | **Description** |
|---|---|
| 100/101 | Computer program product |
| 100-1, 100-2 | Computer program interface |
| 101-105 | Computer program components |
| NS-i | Namespace |
| NSR-i, NSR-i' | Namespace representation |
| TE-i | Text element |
| TER-I, TER-i' | Text element representation |
| OA-i, RA-i | Attributes |
| OAR-i, OAR-i', RAR-i, RAR-i' | Attribute representations |
| 200 | Document |
| 200' | Visualization |
| 210 | Library |
| 250', 251', 252' | Library element lists |
| 260' | Statement |
| 400 | Method |
| 4xx | Method steps |
| 900, 901, 902 | Computers |
| 910, 911, 912 | Processors |
| 920, 921, 922 | Memories |
| 930 | Bus |
| 940 | Input device |
| 950 | Output device |
| 970 | Data carrier (computer readable medium) |
| 980 | Signal |
| 999 | Computer system |

| | |
|---|---|
| Reference numbers | |

## Claims

1. A computer-implemented method (400) for editing text elements in a document (200) using a plurality of predefined text elements (TE-1, TE-2, ..., TE-M); the method (400) comprising the following steps:
prompting (450) the user with text element representations (TER-1', TER-3') of text elements (TE-1, TE-3) that are assigned to a selected namespace (NS-1) in a library (210);
receiving (460) from the user a selected text element representation (TER-3') corresponding to a selected text element (TE-3); and
inserting (470) into the document (200) a further selected text element representation (TER-3) corresponding to the selected text element (TE-3),
prompting (420) the user with at least one namespace representation (NSR-1', NSR-2') corresponding to the namespace (NS-1, NS-2) that is valid for the document (200);
receiving (430) from the user the selected namespace representation (NSR-1') corresponding to the selected namespace (NS-1);
inserting (440) into the document (200) a further representation of the selected namespace (NSR-1) corresponding to the selected namespace (NS-1);
wherein the library (210) has a hierarchy having 3 or more levels and assigns each text element to at least one namespace, and wherein elements stored in the library (210) further are requested attributes (RA-1) and optional attributes (OA-1), and the library (210) defines interdependencies in the form of hierarchical dependencies between the stored elements which are implemented via a table, wherein the namespaces (NS-1 to NS-N) are assigned to a ROOT node which is level 0 of the hierarchy, and form level 1 in hierarchy of the library elements, each namespace having at lest one text element (TE-1 to TE-M) that is assigned as child elements to the namespace, the text elements (TE-1 to TE-M) forming level 2 in the hierarchy, and each text element having at least one attribute (RA-1 to RA-P, OA-1 to OA-Q) that are assigned as child elements to the text element, the attributes (RA-1 to RA-P, OA-1 to OA-Q) forming level 3 of the hierarchy,
wherein the inserting text element representation step (470) comprises the sub-steps:
prompting (472) the user with a list (250') of predefined selectable optional attribute representations (OAR-1', OAR-2') of predefined optional attributes (OA-1, OA-2) that are assigned to the selected text element (TE-3) in the library (210) whereby the exact location of any inserted element within the hierarchy of the library (210) is visualized;
receiving (473) from the user a selected optional attribute representation (OAR-1') corresponding to a selected optional attribute (OA-1); and
inserting (474) into the document (200) a further selected optional attribute representation (OAR-1) corresponding to the selected optional attribute (OA-1).

2. The method (400) of claim 1, wherein the inserting text element representation step (470) comprises:
inserting (471) a predefined required attribute representation (RAR-1) of a predefined required attribute (RA-1) that is assigned to the selected text element (TE-3) in the library (210)

3. The method (400) of claim 1, wherein the inserting text element step (470) comprises the sub-steps:
deleting (475) the selected optional attribute representation (OAR-1') from the list (250'); and
repeating (476) the sub-steps of claim 3 for inserting into the document (200) a still further optional attribute representation (OAR-2) corresponding to a further optional attribute (OA-2) that is assigned to the selected text element (TE-3) in the library (210).

4. The method (400) of claim 1, wherein the document (200) is a Java Server Page (JSP).

5. The method (400) of claim 1, wherein the library (210) assigns text elements to namespaces using a table structure.

6. The method (400) of claim 1, wherein the library (210) assigns text elements to namespaces using an XML file for each namespace.

7. The method (400) of claim 1, wherein each namespace corresponds to a JSP compatible tag library.

8. The method (400) of claim 1, wherein each text element corresponds to a JSP compatible tag.

9. A computer program product (100) embodied by a data carrier (970) or carried by a signal (980); the computer program product (100) having a plurality of instructions for causing at least one processor (910) of a computer (900) to execute the following steps:
prompting (450) the user with predefined text element representations (TER-1', TER-3') of predefined text elements (TE-1, TE-3) that are assigned to a selected namespace (NS-1) in a library (210);
receiving (460) from the user a selected text element representation (TER-3') corresponding to a selected text element (TE-3); and
inserting (470) into the document (200) a further selected text element representation (TER-3) corresponding to the selected text element (TE-3),
prompting (420) the user with at least one predefined namespace representation (NSR-1', NSR-2') corresponding to the predefined namespace (NS-1, NS-2) that is valid for the document (200);
receiving (430) from the user the selected namespace representation (NSR-1) corresponding to the selected namespace (NS-1);
inserting (440) into the document (200) a further representation of the selected namespace (NSR-1) corresponding to the selected namespace (NS-1),
and wherein elements stored in the library (210) having a hierarchy of 3 or more levels further are requested attributes (RA-1) and optional attributes (OA-1), and the library (210) defines interdependencies in the form of hierarchical dependencies between the stored elements which are implemented via a table, wherein the namespace (NS-1 to NS-N) are assigned to a ROOT node which is level 0 of the hierarchy, and form level 1 in hierarchy of the library elements, each namespace having at lest one text element (TE-1 to TE-M) that is assigned as child elements to the namespace, the text elements (TE-1 to TE-M) forming level 2 in the hierarchy, and each text element having at least one attribute (RA-1 to RA-P, OA-1 to OA-Q) that are assigned as child elements to the text element, the attributes (RA-1 to RA-P, OA-1 to OA-Q) forming level 3 of the hierarchy,
wherein the inserting text element representation step (470) comprises the execution of the sub-steps:
prompting (472) the user with a list (250') of predefined selectable optional attribute representations (OAR-1', OAR-2') of predefined optional attributes (OA-1, OA-2) that are assigned to the selected text element (TE-3) in the library (210) whereby the exact location of any inserted element within the hierarchy of the library (210) is visualized;
receiving (473) from the user a selected optional attribute representation (OAR-1') corresponding to a selected optional attribute (OA-1); and
inserting (474) into the document (200) a further selected optional attribute representation (OAR-1) corresponding to the selected optional attribute (OA-1).

10. The computer program product (100) of claim 9, comprising further instructions for causing the computer (900) to execute the further step:
inserting (471) a predefined required attribute representation (RAR-1) of a predefined required attribute (RA-1) that is assigned to the selected text element (TE-3) in the library (210).

11. The computer program product (100) of claim 9, comprising further instructions for causing the computer (900) to execute the further steps:
deleting (475) the selected optional attribute representation (OAR-1') from the list (250'); and
repeating (476) the steps of claim 9 for inserting into the document (200) a still further optional attribute representation (OAR-2) corresponding to a further optional attribute (OA-2) that is assigned to the selected text element (TE-3) in the library (210).

12. The computer program product (100) of claim 9, wherein the document (200) is a Java Server Page (JSP).

13. The computer program product (100) of claim 9, wherein the library (210) assigns text elements to namespaces using a table structure.

14. The computer program product (100) of claim 9, wherein the library (210) assigns text elements to namespaces using an XML file for each namespace.

15. The computer program product (100) of claim 9, wherein each namespace corresponds to a JSP compatible tag library.

16. The computer program product (100) of claim 9, wherein each text element corresponds to a JSP compatible tag.

17. The computer program product (100) of claim 9, wherein a representation scanner (105) scans a statement (260') In the document (200) for a valid insertion position.

18. The computer program product (100) of claim 17, wherein the representation scanner (105) recognizes a fragment within the statement (260') and determines representations of the library (210) elements that complement the fragment in a syntactically correct manner.

19. A computer system (999) for editing a document (200), the computer system (999) having a computer (900) running a computer program (100) comprising the following components:
a text element selector (102) to prompt (450) the user with text element representations (TER-1', TER-3') of text elements (TE-1, TE-3) that are assigned to a selected namespace (NS-1) in a library (210) and to receive (460) from the user the selected text element representation (TER-3') corresponding to the selected text element (TE-3);
a namespace selector (101) to prompt (420) the user with at least one namespace representation (NSR-1', NSR-2') corresponding to the namespace (NS-1, NS-2) that is valid for the document (200) and to receive (430) from the user the selected namespace representation (NSR-1') corresponding to the selected namespace (NS-1); and
a representation inserter (103) to insert (440) into the document (200) a further selected namespace representation (NSR-1) corresponding to the selected namespace (NS-1) and to insert (470) into the document (200) the further selected text element representation (TER-3) corresponding to the selected text element (TE-3);
wherein the computer system (999) has the library (210) to provide a plurality of predefined namespaces (NS-1, NS-2, ..., NS-N) and a plurality of predefined text elements (TE-1, TE-2...., TE-M), wherein the library (210) assigns each text element to at least one namespace,
wherein elements stored in the library (210) having a hierarchy of 3 or more levels further are requested attributes (RA-1) and optional attributes (OA-1), and the library (210) defines interdependencies in the form of hierarchical dependencies between the stored elements which are implemented via a table, wherein the namespaces (NS-1 to NS-N) are assigned to a ROOT node which is level 0 of the hierarchy, and form level 1 in hierarchy of the library elements, each namespace having at lest one text element (TE-1 to TE-M) that is assigned as child elements to the namespace, the text elements (TE-1 to TE-M) forming level 2 in the hierarchy, and each text element having at least one attribute (RA-1 to RA-P, OA-1 to OA-Q) that are assigned as child elements to the text element, the attributes (RA-1 to RA-P, OA-1 to OA-Q) forming level 3 of the hierarchy,
wherein the computer program (100) further comprises
an attribute selector (104) to prompt (472) the user with a list (250') of predefined selectable optional attribute representations (OAR-1', OAR-2') of predefined optional attributes (OA-1, OA-2) that are assigned to the selected text element (TE-3) in the library (210) whereby the exact location of any inserted element within the hierarchy of the library (210) is visualized;
the attribute selector further to receive (473) from the user a selected optional attribute representation (OAR-1') corresponding to a selected optional attribute (OA-1) and to delete (475) the selected optional attribute representation (OAR-1') from the list (250'); and
wherein the representation Inserter (103) further inserts (471) into the document (200) a predefined required attribute representation (RAR-1) of a predefined required attribute (RA-1) that is assigned to the selected text element (TE-3) in the library (210); and further inserts (474) a still further selected optional attribute representation (OAR-1) corresponding to the selected optional attribute (OA-1).

20. The computer system (999) of claim 19, wherein the computer program (100) further comprises a representation scanner (105) to scan a statement (260') in the document (200) for a valid insertion position.

21. The computer system (999) of claim 20, wherein the representation scanner (105) recognizes a fragment within the statement (260') and determines representations of library (210) elements that complement the fragment in a syntactically correct manner.

22. The computer system (999) of claim 19, wherein the document (200) is a Java Server Page (JSP).

23. The computer system (999) of claim 19, wherein the library (210) assigns text elements to namespaces using a table structure.

24. The computer system (999) of claim 19, wherein the library (210) assigns text elements to namespaces using an XML file for each namespace.

25. The computer system (999) of claim 19, wherein each namespace corresponds to a JSP compatible tag library.

26. The computer system (999) of claim 19, wherein each text element corresponds to a JSP compatible tag.

## Patentansprüche

1. Computerimplementiertes Verfahren (400) zum Editieren von Textelementen in einem Dokument (200) unter Verwendung einer Vielzahl von vordefinierten Textelementen (TE-1, TE-2, ..., TE-M); wobei das Verfahren (400) die folgenden Schritte umfasst:
Abfragen (450) des Benutzers mit Textelementdarstellungen (TER-1', TER-3') von Textelementen (TE-1, TE-3), die einem ausgewählten Namensraum (NS-1) in einer Library bzw. Bibliothek (210) zugeordnet sind;
Empfangen (460) einer ausgewählten Textelementdarstellung (TER-3'), die einem ausgewählten Textelement (TE-3) entspricht, von einem Benutzer; und
Einfügen (470) einer weiteren ausgewählten Textelementdarstellung (TER-3), die dem ausgewählten Textelement (TE-3) entspricht, in das Dokument (200);
Abfragen (420) des Benutzers mit wenigstens einer Namensraumdarstellung (NSR-1', NSR-2'), die dem Namensraum (NS-1, NS-2) entspricht, der für das Dokument (200) gültig ist;
Empfangen (430) der ausgewählten Namensraumdarstellung (NSR-1'), die dem ausgewählten Namensraum (NS-1) entspricht, von dem Benutzer;
Einfügen (440) einer weiteren Darstellung des ausgewählten Namensraums (NSR-1), die dem ausgewählten Namensraum (NS-1) entspricht, in das Dokument (200);
wobei die Bibliothek (210) eine Hierarchie mit 3 oder mehr Ebenen hat und jedes Textelement wenigstens einem Namensraum zuordnet, und wobei in der Bibliothek (210) gespeicherte Elemente ferner erforderliche Attribute (RA-1) und optionale Attribute (OA-1) sind, und die Bibliothek (210) gegenseitige Abhängigkeiten in der Form hierarchischer Abhängigkeiten zwischen den gespeicherten Elementen definiert, die über eine Tabelle implementiert sind, wobei die Namensräume (NS-1 bis NS-N) einem Wurzelknoten zugeordnet sind, der in der Hierarchie die Ebene 0 ist, und in der Hierarchie der Bibliothekselemente die Ebene 1 bilden, wobei jeder Namensraum wenigstens ein Textelement (TE-1 bis TE-M) hat, das als Kindelement dem Namensraum zugeordnet ist, wobei die Textelemente (TE1-1 bis TE-M) in der Hierarchie die Ebene 2 bilden und jedes Textelement wenigstens ein Attribut (RA-1 bis RA-P, OA-1 bis OA-Q) hat, das dem Textelement als Kindelement zugeordnet ist, wobei die Attribute (RA-1 bis RA-P, OA-1 bis OA-Q) die Ebene 3 der Hierarchie bilden,
wobei der Schritt des Einfügens der Textelementdarstellung (470) die folgenden Teilschritte umfasst:
Abfragen (472) des Benutzers mit einer Liste (250') vordefinierter auswählbarer optionaler Attributdarstellungen (OAR-1', OAR-2') vordefinierter optionaler Attribute (OA-1, OA-2), die dem ausgewählten Textelement (TE-3) in der Bibliothek (210) zugeordnet sind, wobei die exakte Stelle jedes eingefügten Elementes innerhalb der Hierarchie der Bibliothek (210) visualisiert wird;
Empfangen (473) einer ausgewählten optionalen Attributdarstellung (OAR-1'), die einem ausgewählten optionalen Attribut (OA-1) entspricht, von dem Benutzer; und
Einfügen (474) einer weiteren ausgewählten optionalen Attributdarstellung (OAR-1), die dem ausgewählten optionalen Attribut (OA-1) entspricht, in das Dokument (200).

2. Verfahren (400) nach Anspruch 1, wobei der Schritt des Einfügens der Textelementdarstellung (470) umfasst:
Einfügen (471) einer vordefinierten erforderlichen Attributdarstellung (RAR-1) eines vordefinierten erforderlichen Attributs (RA-1), das einem ausgewählten Textelement (TE-3) in der Bibliothek (210) zugeordnet ist.

3. Verfahren (400) nach Anspruch 1, wobei der Schritt des Einfügens des Textelements (470) die folgenden Teilschritte umfasst:
Löschen (475) der ausgewählten optionalen Attributdarstellung (OAR-1') aus der Liste (250'); und
Wiederholen (476) der Teilschritte von Anspruch 3 zum Einfügen noch einer weiteren optionalen Attributdarstellung (OAR-2), die einem weiteren optionalen Attribut (OA-2) entspricht, das dem ausgewählten Textelement (TE-3) in der Bibliothek (210) zugeordnet ist, in das Dokument (200).

4. Verfahren (400) nach Anspruch 1, wobei das Dokument (200) eine Java Server Page (JSP) ist.

5. Verfahren (400) nach Anspruch 1, wobei die Bibliothek (210) Textelemente unter Verwendung einer Tabellenstruktur Namensräumen zuordnet.

6. Verfahren (400) nach Anspruch 1, wobei die Bibliothek (210) Textelemente unter Verwendung einer XML-Datei für jeden Namensraum Namensräumen zuordnet.

7. Verfahren (400) nach Anspruch 1, wobei jeder Namensraum einer JSP-kompatiblen Tag-Library bzw. Tag-Bibliothek entspricht.

8. Verfahren (400) nach Anspruch 1, wobei jedes Textelement einem JSP-kompatiblen Tag entspricht.

9. Computerprogrammprodukt (100), das durch einen Datenträger (970) implementiert ist oder von einem Signal (980) transportiert wird; wobei das Computerprogrammprodukt (100) eine Vielzahl von Anweisungen hat, um zu bewirken, dass wenigstens ein Prozessor (910) eines Computers (900) die folgenden Schritte ausführt:
Abfragen (450) des Benutzers mit Textelementdarstellungen (TER-1', TER-3') von vordefinierten Textelementen (TE-1, TE-3), die einem ausgewählten Namensraum (NS-1) in einer Bibliothek (210) zugeordnet sind;
Empfangen (460) einer ausgewählten Textelementdarstellung (TER-3'), die einem ausgewählten Textelement (TE-3) entspricht, von einem Benutzer; und
Einfügen (470) einer weiteren ausgewählten Textelementdarstellung (TER-3), die dem ausgewählten Textelement (TE-3) entspricht, in das Dokument (200);
Abfragen (420) des Benutzers mit wenigstens einer vordefinierten Namensraumdarstellung (NSR-1', NSR-2'), die dem vordefinierten Namensraum (NS-1, NS-2) entspricht, der für das Dokument (200) gültig ist;
Empfangen (430) der ausgewählten Namensraumdarstellung (NSR-1'), die dem ausgewählten Namensraum (NS-1) entspricht, von dem Benutzer;
Einfügen (440) einer weiteren Darstellung des ausgewählten Namensraums (NSR-1), die dem ausgewählten Namensraum (NS-1) entspricht, in das Dokument (200);
und wobei Elemente, die in der Bibliothek (210) mit einer Hierarchie mit 3 oder mehr Ebenen gespeichert sind, ferner erforderliche Attribute (RA-1) und optionale Attribute (OA-1) sind, und die Bibliothek (210) gegenseitige Abhängigkeiten in der Form hierarchischer Abhängigkeiten zwischen den gespeicherten Elementen definiert, die über eine Tabelle implementiert sind,
wobei die Namensräume (NS-1 bis NS-N) einem Wurzelknoten zugeordnet werden, der in der Hierarchie die Ebene 0 ist, und in der Hierarchie der Bibliothekselemente die Ebene 1 bilden, wobei jeder Namensraum wenigstens ein Textelement (TE-1 bis TE-M) hat, das als Kindelement dem Namensraum zugeordnet ist, wobei die Textelemente (TE1-1 bis TE-M) in der Hierarchie die Ebene 2 bilden und jedes Textelement wenigstens ein Attribut (RA-1 bis RA-P, OA-1 bis OA-Q) hat, das dem Textelement als Kindelement zugeordnet ist, wobei die Attribute (RA-1 bis RA-P, OA-1 bis OA-Q) die Ebene 3 der Hierarchie bilden,
wobei der Schritt des Einfügens der Textelementdarstellung (470) die folgenden Teilschritte umfasst:
Abfragen (472) des Benutzers mit einer Liste (250') vordefinierter auswählbarer optionaler Attributdarstellungen (OAR-1', OAR-2') vordefinierter optionaler Attribute (OA-1, OA-2), die dem ausgewählten Textelement (TE-3) in der Bibliothek (210) zugeordnet sind, wobei die exakte Stelle jedes eingefügten Elementes innerhalb der Hierarchie der Bibliothek (210) visualisiert wird;
Empfangen (473) einer ausgewählten optionalen Attributdarstellung (OAR-1'), die einem ausgewählten optionalen Attribut (OA-1) entspricht, von dem Benutzer; und
Einfügen (474) einer weiteren ausgewählten optionalen Attributdarstellung (OAR-1), die dem ausgewählten optionalen Attribut (OA-1) entspricht, in das Dokument (200).

10. Computerprogrammprodukt (100) nach Anspruch 9, das ferner Anweisungen umfasst, um zu bewirken, dass der Computer (900) den folgenden weiteren Schritt des ausführt:
Einfügen (471) einer vordefinierten erforderlichen Attributdarstellung (RAR-1) eines vordefinierten erforderlichen Attributs (RA-1), das einem ausgewählten Textelement (TE-3) in der Bibliothek (210) zugeordnet ist.

11. Computerprogrammprodukt (100) nach Anspruch 9, das ferner Anweisungen umfasst, um zu bewirken, dass der Computer (900) die folgenden weiteren Schritte ausführt:
Löschen (475) der ausgewählten optionalen Attributdarstellung (OAR-1') aus der Liste (250'); und
Wiederholen (476) der Schritte von Anspruch 9 zum Einfügen noch einer weiteren optionalen Attributdarstellung (OAR-2), die einem weiteren optionalen Attribut (OA-2) entspricht, das dem ausgewählten Textelement (TE-3) in der Bibliothek (210) zugeordnet ist, in das Dokument (200).

12. Computerprogrammprodukt (100) nach Anspruch 9, wobei das Dokument (200) eine Java Server Page (JSP) ist.

13. Computerprogrammprodukt (100) nach Anspruch 9, wobei die Bibliothek (210) Textelemente unter Verwendung einer Tabellenstruktur Namensräumen zuordnet.

14. Computerprogrammprodukt (100) nach Anspruch 9, wobei die Bibliothek (210) Textelemente unter Verwendung einer XML-Datei für jeden Namensraum Namensräumen zuordnet.

15. Computerprogrammprodukt (100) nach Anspruch 9, wobei jeder Namensraum einer JSP-kompatiblen Tag-Bibliothek entspricht.

16. Computerprogrammprodukt (100) nach Anspruch 9, wobei jedes Textelement einem JSP-kompatiblen Tag entspricht.

17. Computerprogrammprodukt (100) nach Anspruch 9, wobei ein Darstellungsscanner (105) eine Anweisung bzw. Angabe (260') in dem Dokument (200) nach einer gültigen Einfügeposition abtastet.

18. Computerprogrammprodukt (100) nach Anspruch 17, wobei der Darstellungsscanner (105) ein Fragment bzw. einen Teil innerhalb der Angabe (260') erkennt und Darstellungen der Elemente der Bibliothek (210) bestimmt, die den Teil in einer syntaktisch korrekten Weise ergänzen.

19. Computersystem (999) zum Editieren eines Dokuments (200), wobei das Computersystem (999) einen Computer (900) hat, der ein Computerprogramm (100) laufen lässt, das die folgenden Komponenten umfasst:
eine Textelementauswahleinrichtung (102), um den Benutzer mit Textelementdarstellungen (TER-1', TER-3') von Textelementen (TE-1, TE-3) abzufragen, die einem ausgewählten Namensraum (NS-1) in einer Bibliothek (210) zugeordnet sind, und um von dem Benutzer die ausgewählte Textelementdarstellung (TER-3'), die dem ausgewählten Textelement (TE-3) entspricht, zu empfangen;
eine Namensraumauswahleinrichtung (101), um den Benutzer mit wenigstens einer Namensraumdarstellung (NSR-1', NSR-2'), die dem Namensraum (NS-1, NS-2) entspricht, der für das Dokument (200) gültig ist, abzufragen und von dem Benutzer die ausgewählte Namensraumdarstellung (NSR-1'), die dem ausgewählten Namensraum (NS-1) entspricht, zu empfangen; und
eine Darstellungseinfügungseinrichtung (103), um eine weitere ausgewählte Namensraumdarstellung (NSR-1), die dem ausgewählten Namensraum (NS-1) entspricht, in das Dokument (200) einzufügen und die weitere ausgewählte Textelementdarstellung (TER-3), die dem ausgewählten Textelement (TE-3) entspricht, in das Dokument (200) einzufügen;
wobei das Computersystem (999) die Bibliothek (210) hat, um eine Vielzahl von vordefinierten Namensräumen (NS-1, NS-2, ..., NS-N) und eine Vielzahl von vordefinierten Textelementen (TE-1, TE-2, ..., TE-M) bereitzustellen, wobei die Bibliothek (210) jedes Textelement wenigstens einem Namensraum zuordnet,
wobei Elemente, die in der Bibliothek (210) mit einer Hierarchie mit 3 oder mehr Ebenen gespeichert sind, ferner erforderliche Attribute (RA-1) und optionale Attribute (OA-1) sind, und die Bibliothek (210) gegenseitige Abhängigkeiten in der Form hierarchischer Abhängigkeiten zwischen den gespeicherten Elementen definiert, die über eine Tabelle implementiert sind, wobei die Namensräume (NS-1 bis NS-N) einem Wurzelknoten zugeordnet sind, der in der Hierarchie die Ebene 0 ist, und in der Hierarchie der Bibliothekselemente die Ebene 1 bilden, wobei jeder Namensraum wenigstens ein Textelement (TE-1 bis TE-M) hat, das als Kindelement dem Namensraum zugeordnet ist, wobei die Textelemente (TE1-1 bis TE-M) in der Hierarchie die Ebene 2 bilden und jedes Textelement wenigstens ein Attribut (RA-1 bis RA-P, OA-1 bis OA-Q) hat, das dem Textelement als Kindelement zugeordnet ist, wobei die Attribute (RA-1 bis RA-P, OA-1 bis OA-Q) die Ebene 3 der Hierarchie bilden,
wobei das Computerprogramm (100) ferner umfasst:
eine Attributauswahleinrichtung (104), um den Benutzer mit einer Liste (250') vordefinierter auswählbarer optionaler Attributdarstellungen (OAR-1', OAR-2') vordefinierter optionaler Attribute (OA-1, OA-2), die den ausgewählten Textelementen (TE-3) in der Bibliothek (210) mit einer Hierarchie von 3 oder mehr Ebenen zugeordnet sind, abzufragen (472), wobei die exakte Stelle jedes eingefügten Elements innerhalb der Hierarchie der Bibliothek (210) visualisiert wird,
die Attributauswahleinrichtung, um ferner von dem Benutzer eine optionale Attributdarstellung (OAR-1'), die einem ausgewählten optionalen Attribut (OA-1) entspricht, zu empfangen (473) und die ausgewählte optionale Attributdarstellung (OAR-1') aus der Liste (250') zu löschen; und
wobei die Darstellungseinfügungseinrichtung (103) ferner eine vordefinierte erforderliche Attributdarstellung (RAR-1) eines vordefinierten erforderlichen Attributs (RA-1), das dem ausgewählten Textelement (TE-3) in der Bibliothek (210) zugeordnet ist, in das Dokument (200) einfügt; und ferner noch eine weitere ausgewählte optionale Attributdarstellung (OAR-1), die dem ausgewählten optionalen Attribut (OA-1) entspricht, einfügt (474).

20. Computersystem (999) nach Anspruch 19, wobei das Computerprogramm (100) ferner einen Darstellungsscanner (105) umfasst, um eine Angabe (260') in dem Dokument (200) nach einer gültigen Einfügeposition abzutasten.

21. Computersystem (999) nach Anspruch 20, wobei der Darstellungsscanner (105) einen Teil innerhalb der Angabe (260') erkennt und Darstellungen der Elemente der Bibliothek (210) bestimmt, die den Teil in einer syntaktisch korrekten Weise ergänzen.

22. Computersystem (999) nach Anspruch 19, wobei das Dokument (200) eine Java Server Page (JSP) ist.

23. Computersystem (999) nach Anspruch 19, wobei die Bibliothek (210) Textelemente unter Verwendung einer Tabellenstruktur Namensräumen zuordnet.

24. Computersystem (999) nach Anspruch 19, wobei die Bibliothek (210) Textelemente unter Verwendung einer XML-Datei für jeden Namensraum Namensräumen zuordnet.

25. Computersystem (999) nach Anspruch 19, wobei jeder Namensraum einer JSP-kompatiblen Tag-Bibliothek entspricht.

26. Computersystem (999) nach Anspruch 19, wobei jedes Textelement einem JSP-kompatiblen Tag entspricht.

## Revendications

**1.** Procédé implémenté par ordinateur (400) pour éditer des éléments de texte dans un document (200), utilisant une pluralité d'éléments de texte prédéfinis (TE-1, TE-2, ..., TE-M), le procédé (400) comprenant les étapes suivantes :
la demande (450) de l'utilisateur avec des représentations d'éléments de texte (TER-1', TER-3') d'éléments de texte (TE-1, TE-3) qui sont attribués à un espace de nom sélectionné (NS-1) dans une bibliothèque (210) ;
la réception (460) par l'utilisateur d'une représentation sélectionnée d'élément de texte (TER-3') qui correspond à un élément de texte sélectionné (TE-3) ; et
l'insertion (470) dans le document (200) d'une autre représentation sélectionnée d'élément de texte (TER-3) qui correspond à l'élément de texte sélectionné (TE-3) ;
la demande (420) de l'utilisateur avec au moins une représentation d'espace de nom (NSR-1', NSR-2') qui correspond à l'espace de nom (NS-1, NS-2) qui est valide pour le document (200) ;
la réception (430) par l'utilisateur de la représentation sélectionnée d'espace de nom (NSR-1') qui correspond à l'espace de nom sélectionné (NS-1) ;
l'insertion (440) dans le document (200) d'une autre représentation de l'espace de nom sélectionné (NS-1) qui correspond à l'espace de nom sélectionné (NS-1) ;
dans lequel la bibliothèque (210) a une hiérarchie de 3 niveaux ou davantage et attribue chaque élément de texte à au moins un espace de nom, et dans lequel des éléments mémorisés dans la bibliothèque (210) sont en outre des attributs requis (RA-1) et des attributs optionnels (OA-1), et dans lequel la bibliothèque (210) définit des interdépendances sous la forme de dépendances hiérarchiques entre les éléments mémorisés qui sont implémentés par l'intermédiaire d'un tableau, dans lequel les espaces de nom (NS-1 à NS-N) sont attribués à un noeud de racine (ROOT) qui est le niveau « 0 » de la hiérarchie et qui forme le niveau « 1 » dans la hiérarchie des éléments de bibliothèque, chaque espace de nom ayant au moins un élément de texte (TE-1 à TE-M) qui est attribué comme élément affilié à l'espace de nom, les éléments de texte (TE-1 à TE-M) formant le niveau « 2 » dans la hiérarchie, et chaque élément de texte ayant au moins un attribut (RA-1 à RA-P, OA-1 à OA-Q) qui est attribué comme élément affilié à l'élément de texte, les attributs (RA-1 à RA-P, OA-1 à OA-Q) formant le niveau « 3 » dans la hiérarchie,
dans lequel l'étape (470) consistant à insérer la représentation d'élément de texte comporte les étapes partielles suivantes :
la demande (472) de l'utilisateur avec une liste (250') de représentations d'attributs (OAR-1', OAR-2'), prédéfinies et sélectionnables en option, d'attributs sélectionnés en option (OA-1, OA-2) qui sont attribués à l'élément de texte sélectionné (TE-3) dans la bibliothèque (210), sachant que l'emplacement exact de chaque élément inséré à l'intérieur de la hiérarchie de la bibliothèque (210) est visualisé ;
la réception (473) par l'utilisateur d'une représentation d'attribut (OAR-1'), sélectionnée en option, qui correspond à un attribut sélectionné en option (OA-1) ; et
l'insertion (474) dans le document (200) d'une autre représentation d'attribut (OAR-1), sélectionnée en option, qui correspond à l'attribut sélectionné en option (OA-1).

**2.** Procédé (400) selon la revendication 1, dans lequel l'étape (470) consistant à insérer la représentation d'élément de texte comprend :
l'insertion (471) d'une représentation d'attribut (RAR-1), prédéfinie et requise, d'un attribut prédéfini et requis (RA-1) qui est attribué à l'élément de texte sélectionné (TE-3) dans la bibliothèque (210).

**3.** Procédé (400) selon la revendication 1, dans lequel l'étape (470) consistant à insérer la représentation d'élément de texte comporte les étapes partielles suivantes :
l'effacement (475) de la représentation d'attribut (OAR-1'), sélectionnée en option, depuis la liste (250') ; et
la répétition (476) des étapes partielles de la revendication 3 pour l'insertion dans le document (200) encore d'une autre représentation d'attribut optionnelle (OAR-2) qui correspond à un autre attribut optionnel (OA-2) qui est attribué à l'élément de texte sélectionné (TE-3) dans la bibliothèque (210).

**4.** Procédé (400) selon la revendication 1, dans lequel le document (200) est du type JSP (Java Server Page).

**5.** Procédé (400) selon la revendication 1, dans lequel la bibliothèque (210) attribue des éléments de texte à des espaces de nom qui utilisent une structure de tableau.

**6.** Procédé (400) selon la revendication 1, dans lequel la bibliothèque (210) attribue des éléments de texte à des espaces de nom qui utilisent un fichier XML pour chaque espace de nom.

**7.** Procédé (400) selon la revendication 1, dans lequel chaque espace de nom correspond à une bibliothèque d'étiquettes (« tags ») compatible avec les JSP.

**9.** Produit de programme d'ordinateur (100) contenu sur un support de données (970) ou transporté par un signal (980), dans lequel le produit de programme d'ordinateur (100) a une pluralité d'instructions afin de provoquer qu'au moins un processeur (910) d'un ordinateur (900) exécute les étapes suivantes :
la demande (450) de l'utilisateur avec des représentations d'éléments de texte (TER-1', TER-3') d'éléments de texte prédéfinis (TE-1, TE-3) qui sont attribués à un espace de nom sélectionné (NS-1) dans une bibliothèque (210) ;
la réception (460) par l'utilisateur d'une représentation sélectionnée d'élément de texte (TER-3') qui correspond à un élément de texte sélectionné (TE-3) ; et
l'insertion (470) dans le document (200) d'une autre représentation sélectionnée d'élément de texte (TER-3) qui correspond à l'élément de texte sélectionné (TE-3) ;
la demande (420) de l'utilisateur avec au moins une représentation prédéfinie d'espace de nom (NSR-1', NSR-2') qui correspond à l'espace de nom prédéfini (NS-1, NS-2) qui est valide pour le document (200) ;
la réception (430) par l'utilisateur de la représentation sélectionnée d'espace de nom (NSR-1') qui correspond à l'espace de nom sélectionné (NS-1) ;
l'insertion (440) dans le document (200) d'une autre représentation de l'espace de nom sélectionné (NS-1) qui correspond à l'espace de nom sélectionné (NS-1) ;
et dans lequel des éléments mémorisés dans la bibliothèque (210) qui a une hiérarchie de 3 niveaux ou davantage, sont en outre des attributs requis (RA-1) et des attributs optionnels (OA-1), et dans lequel la bibliothèque (210) définit des interdépendances sous la forme de dépendances hiérarchiques entre les éléments mémorisés qui sont implémentés par l'intermédiaire d'un tableau, dans lequel les espaces de nom (NS-1 à NS-N) sont attribués à un noeud de racine (ROOT) qui est le niveau « 0 » de la hiérarchie et qui forme le niveau « 1 » dans la hiérarchie des éléments de bibliothèque, chaque espace de nom ayant au moins un élément de texte (TE-1 à TE-M) qui est attribué comme élément affilié à l'espace de nom, les éléments de texte (TE-1 à TE-M) formant le niveau « 2 » dans la hiérarchie, et chaque élément de texte ayant au moins un attribut (RA-1 à RA-P, OA-1 à OA-Q) qui est attribué comme élément affilié à l'élément de texte, les attributs (RA-1 à RA-P, OA-1 à OA-Q) formant le niveau « 3 » dans la hiérarchie,
dans lequel l'étape (470) consistant à insérer la représentation d'élément de texte comprend l'exécution des étapes partielles suivantes :
la demande (472) de l'utilisateur avec une liste (250') de représentations d'attributs (OAR-1', OAR-2'), prédéfinies et sélectionnables en option, d'attributs sélectionnés en option (OA-1, OA-2) qui sont attribués à l'élément de texte sélectionné (TE-3) dans la bibliothèque (210), sachant que l'emplacement exact de chaque élément inséré à l'intérieur de la hiérarchie de la bibliothèque (210) est visualisé ;
la réception (473) par l'utilisateur d'une représentation d'attribut (OAR-1'), sélectionnée en option, qui correspond à un attribut sélectionné en option (OA-1) ; et
l'insertion (474) dans le document (200) d'une autre représentation d'attribut (OAR-1), sélectionnée en option, qui correspond à l'attribut sélectionné en option (OA-1).

**10.** Produit de programme d'ordinateur (100) selon la revendication 9, comprenant en outre des instructions afin de provoquer que l'ordinateur (900) exécute l'étape supplémentaire suivante :
l'insertion (471) d'une représentation d'attribut (RAR-1), prédéfinie et requise, d'un attribut prédéfini et requis (RA-1) qui est attribué à l'élément de texte sélectionné (TE-3) dans la bibliothèque (210).

**11.** Produit de programme d'ordinateur (100) selon la revendication 9, comprenant en outre des instructions afin de provoquer que l'ordinateur (900) exécute les étapes supplémentaires suivantes :
l'effacement (475) de la représentation d'attribut (OAR-1'), sélectionnée en option, depuis la liste (250') ; et
la répétition (476) des étapes de la revendication 9 pour l'insertion dans le document (200) encore d'une autre représentation d'attribut optionnelle (OAR-2) qui correspond à un autre attribut optionnel (OA-2) qui est attribué à l'élément de texte sélectionné (TE-3) dans la bibliothèque (210).

**12.** Produit de programme d'ordinateur (100) selon la revendication 9, dans lequel le document (200) est du type JSP (Java Server Page).

**13.** Produit de programme d'ordinateur (100) selon la revendication 9, dans lequel la bibliothèque (210) attribue des éléments de texte à des espaces de nom qui utilisent une structure de tableau.

**14.** Produit de programme d'ordinateur (100) selon la revendication 9, dans lequel la bibliothèque (210) attribue des éléments de texte à des espaces de nom qui utilisent un fichier XML pour chaque espace de nom.

**15.** Produit de programme d'ordinateur (100) selon la revendication 9, dans lequel chaque espace de nom correspond à une bibliothèque d'étiquettes (« tags ») compatible avec les JSP.

**16.** Produit de programme d'ordinateur (100) selon la revendication 9, dans lequel chaque élément de texte correspond à une étiquette (« tag ») compatible avec les JSP.

**17.** Produit de programme d'ordinateur (100) selon la revendication 9, dans lequel un scanner de représentation (105) scanne une disposition ou une déclaration (260') dans le document (200) pour une position d'insertion valide.

**18.** Produit de programme d'ordinateur (100) selon la revendication 17, dans lequel le scanner de représentation (105) reconnaît un fragment à l'intérieur de la disposition ou de la déclaration (260') et détermine des représentations des éléments de la bibliothèque (210) qui complètent le fragment d'une manière syntaxiquement correcte.

**19.** Système d'ordinateur (999) pour éditer un document (200), le système d'ordinateur (999) ayant un ordinateur (900) sur lequel tourne un programme d'ordinateur (100) comprenant les composants suivants :
un sélecteur d'élément de texte (102) pour la demande (450) de l'utilisateur avec des représentations d'éléments de texte (TER-1', TER-3') d'éléments de texte (TE-1, TE-3) qui sont attribués à un espace de nom sélectionné (NS-1) dans une bibliothèque (210) et pour la réception (460) par l'utilisateur de la représentation sélectionnée d'élément de texte (TER-3') qui correspond à un élément de texte sélectionné (TE-3) ;
un sélecteur d'espace de nom (101) pour la demande (420) de l'utilisateur avec au moins une représentation d'espace de nom (NSR-1', NSR-2') qui correspond à l'espace de nom (NS-1, NS-2) qui est valide pour le document (200) et pour la réception (430) par l'utilisateur de la représentation sélectionnée d'espace de nom (NSR-1') qui correspond à l'espace de nom sélectionné (NS-1) ; et
un dispositif d'insertion de représentation (103) pour l'insertion (440) dans le document (200) d'une autre représentation sélectionnée d'espace de nom (NSR-1) qui correspond à l'espace de nom sélectionné (NS-1) et pour l'insertion (470) dans le document (200) de l'autre représentation sélectionnée d'élément de texte (TER-3) qui correspond à l'élément de texte sélectionné (TE-3) ;
dans lequel le système d'ordinateur (999) a la bibliothèque (210) afin de fournir une pluralité d'espaces de nom prédéfinis (NS-1, NS-2, ..., NS-N) et une pluralité d'éléments de texte prédéfinis (TE-1, TE-2, ..., TE-M), dans lequel la bibliothèque (210) attribue chaque élément de texte à au moins un espace de nom,
dans lequel des éléments mémorisés dans la bibliothèque (210) qui a une hiérarchie de 3 niveaux ou davantage, sont en outre des attributs requis (RA-1) et des attributs optionnels (OA-1), et dans lequel la bibliothèque (210) définit des interdépendances sous la forme de dépendances hiérarchiques entre les éléments mémorisés qui sont implémentés par l'intermédiaire d'un tableau, dans lequel les espaces de nom (NS-1 à NS-N) sont attribués à un noeud de racine (ROOT) qui est le niveau « 0 » de la hiérarchie et qui forme le niveau « 1 » dans la hiérarchie des éléments de bibliothèque, chaque espace de nom ayant au moins un élément de texte (TE-1 à TE-M) qui est attribué comme élément affilié à l'espace de nom, les éléments de texte (TE-1 à TE-M) formant le niveau « 2 » dans la hiérarchie, et chaque élément de texte ayant au moins un attribut (RA-1 à RA-P, OA-1 à OA-Q) qui est attribué comme élément affilié à l'élément de texte, les attributs (RA-1 à RA-P, OA-1 à OA-Q) formant le niveau « 3 » dans la hiérarchie,
dans lequel le programme d'ordinateur (100) comprend en outre :
un sélecteur d'attribut (104) pour la demande (472) de l'utilisateur avec une liste (250') de représentations d'attributs (OAR-1', OAR-2'), prédéfinies et sélectionnables en option, d'attributs sélectionnés en option (OA-1, OA-2) qui sont attribués à l'élément de texte sélectionné (TE-3) dans la bibliothèque (210), sachant que l'emplacement exact de chaque élément inséré à l'intérieur de la hiérarchie de la bibliothèque (210) est visualisé ;
le sélecteur d'attribut, en outre pour la réception (473) par l'utilisateur d'une représentation d'attribut (OAR-1'), sélectionnée en option, qui correspond à un attribut sélectionné en option (OA-1) et pour l'effacement (475) de la représentation d'attribut (OAR-1'), sélectionnée en option, depuis la liste (250') ; et
dans lequel le dispositif d'insertion de représentation (103) insère (471) en outre dans le document (200) une représentation d'attribut (RAR-1), prédéfinie et requise, d'un attribut prédéfini et requis (RA-1) qui est attribué à l'élément de texte sélectionné (TE-3) dans la bibliothèque (210) et insère (474) en outre une autre représentation d'attribut (OAR-1), encore sélectionnée en option, qui correspond à l'attribut sélectionné en option (OA-1).

**20.** Système d'ordinateur (999) selon la revendication 19, dans lequel le programme d'ordinateur (100) comprend en outre un scanner de représentation (105) pour scanner une disposition ou une déclaration (260') dans le document (200) pour une position d'insertion valide.

**21.** Système d'ordinateur (999) selon la revendication 20, dans lequel le scanner de représentation (105) reconnaît un fragment à l'intérieur de la disposition ou de la déclaration (260') et détermine des représentations des éléments de la bibliothèque (210) qui complètent le fragment d'une manière syntaxiquement correcte.

**22.** Système d'ordinateur (999) selon la revendication 19, dans lequel le document (200) est du type JSP (Java Server Page).

**23.** Système d'ordinateur (999) selon la revendication 19, dans lequel la bibliothèque (210) attribue des éléments de texte à des espaces de nom qui utilisent une structure de tableau.

**24.** Système d'ordinateur (999) selon la revendication 19, dans lequel la bibliothèque (210) attribue des éléments de texte à des espaces de nom qui utilisent un fichier XML pour chaque espace de nom.

**25.** Système d'ordinateur (999) selon la revendication 19, dans lequel chaque espace de nom correspond à une bibliothèque d'étiquettes (« tags ») compatible avec les JSP.

**26.** Système d'ordinateur (999) selon la revendication 19, dans lequel chaque élément de texte correspond à une étiquette compatible avec les JSP.
